# EUROPÄISCHE PATENTANMELDUNG

(11) **EP 4 280 240 A1**
(43) Veröffentlichungstag der Anmeldung: **22.11.2023**
(21) Anmeldenummer: 23172978.1
(22) Anmeldetag: 11.05.2023
(51) Int. Cl.: H01G 4/28, H01G 4/32, H01G 4/224, H01G 4/232

(54) **KONDENSATOR**

(30) Priorität: 15.05.2022 DE 102022112138
(71) Anmelder: Idea GmbH, 72285 Pfalzgrafenweiler-Bösingen (DE)
(72) Erfinder: Häußler, Andreas, 72250 Freudenstadt-Frutenhof (DE)
(74) Vertreter: Suchy, Ulrich Johannes

(57) **Zusammenfassung**

Die Erfindung betrifft einen Kondensator (1) mit einer Anschlussseite (2) und einer der Anschlussseite (2) gegenüberliegenden Kopfseite (3). Um den Kondensator (1) für sehr schnell schaltende Wechselumrichter zu schaffen, schlägt die Erfindung vor, die Induktivität des Kondensators (1) zu verringern, und zwar unter anderem dadurch, dass entweder eine erste Kondensatorwicklung (5) als erster Leiter (15) von einem inneren und einem äußeren Kupferrohr (9, 10) als zweiten und dritten Leiter (16, 17) umfasst ist, oder dass eine zweite Kondensatorwicklung (19) als zweiter Leiter (16) vorgesehen wird, die koaxial zur ersten Kondensatorwicklung (5) angeordnet und in Reihe zu dieser geschaltet ist.

## Beschreibung

Die Erfindung betrifft einen Kondensator mit den Merkmalen des Oberbegriffs des Anspruchs 1.

Elektrische Kondensatoren finden in der Elektrotechnik vielfachen Einsatz. Insbesondere bei Wechselrichtern, wie sie bei Induktionsanlagen zum Einsatz kommen, stoßen herkömmliche Kondensatoren mit Kondensatorwicklungen an ihre Grenzen. Je schneller derartige Wechselrichter schalten, desto mehr Überspannungen treten auf, die schädlich für den Betrieb sind.

Der Erfindung liegt daher die Aufgabe zugrunde, Kondensatoren zu schaffen, die beispielsweise beim Einsatz in Wechselrichtern schneller schaltbar sind bei geringeren Überspannungseffekten.

Diese Aufgabe wird erfindungsgemäß durch den Kondensator mit den Merkmalen des Anspruchs 1 gelöst.

Der Erfindung liegt die Erkenntnis zu Grunde, dass die Kondensatoren eine Eigeninduktivität aufweisen, die zusammen mit dem kapazitiven Anteil zu einem Schwingkreis führen kann. Nähert sich die Schaltfrequenz der Eigenfrequenz dieses Schwingkreises, so kommt es zu den genannten Überspannungen. Wird die Induktivität verringert, dann steigt die Eigenfrequenz, was den Einsatz für höhere Schaltfrequenzen ermöglicht.

Der erfindungsgemäße Kondensator weist eine Anschlussseite und eine der Anschlussseite gegenüberliegende Kopfseite auf. Die Anschlussseite dient dazu, den Kondensator in einen Stromkreis zu integrieren, also beispielsweise an Kontakte einer Leiterplatte anzuschließen. Die Anschlussseite weist dazu Anschlusselemente, wie Drähte, Bolzen oder Einpresskontakte, auf, während die Kopfseite keine Anschlusselemente aufweist und insbesondere eine elektrisch isolierende Hülle aufweist.

Von der Anschlussseite zur Kopfseite erstrecken sich ein erster und ein zweiter elektrischer Leiter, die koaxial zueinander angeordnet und an der Kopfseite miteinander verbunden sind. Im Weiteren werden zur Vereinfachung die elektrischen Leiter lediglich "Leiter" genannt. "Verbunden" meint hier sowohl eine mechanische als auch elektrische Verbindung, wobei die mechanische Verbindung lediglich einen physischen Kontakt erfordert, zusätzlich aber auch eine zugfeste Verbindung aufweisen kann. Ansonsten sind die beiden Leiter elektrisch isoliert voneinander, insbesondere ist zwischen den Leitern eine Isolierschicht oder ein Isolierkörper angeordnet. Der erste Leiter weist eine erste Kondensatorwicklung auf. Die Wickelachse der Kondensatorwicklung verläuft insbesondere zwischen der Anschlussseite und der Kopfseite und definiert eine Längsund Symmetrieachse des Kondensators. Die Kondensatorwicklung besteht wie bei bekannten Kondensatoren insbesondere aus einer Kombination von Metall- und Kunststofffolien oder zwei mit Metall bedampften Kunststofffolien, bei denen die Stirnseiten der Kondensatorwicklung jeweils zur Kontaktierung dienen, insbesondere der Kontaktierung an der Anschlussseite oder der Kopfseite. Denkbar, wenn auch nicht bevorzugt, ist, dass der erste Leiter über die Kondensatorwicklung hinaus ein weiteres elektrisch leitendes Element aufweist. Die Bezeichnungen "erste" und "zweite" dienen lediglich der Unterscheidung der jeweiligen Elemente, meinen jedoch nicht eine bestimmte Reihenfolge.

Bei konventionellen Kondensatoren wird der zweite Leiter typischerweise entweder durch einen Wickelkern im Inneren der Kondensatorwicklung oder durch ein die Kondensatorwicklung umgreifendes Rohr gebildet. Die Induktivität eines derartigen Kondensators ergibt sich daraus, dass die Kondensatorwicklung gemeinsam mit dem zweiten Leiter eine Spule mit einer Windung aufspannt. In einem gedachten Längsschnitt parallel zur Achse der Kondensatorwicklung liegt je eine aufgespannte Fläche dieser Windung rechts und links der Achse. Der Erfindung liegt die Idee zugrunde, diese Fläche zu verringern.

Hierzu schlägt die Erfindung vor, dass der zweite Leiter eine zweite Kondensatorwicklung aufweist und/oder dass der Kondensator einen dritten elektrischen Leiter aufweist, der sich von der Anschlussseite zur Kopfseite erstreckt und mit dem ersten und zweiten Leiter an der Kopfseite verbunden ist. Insbesondere ist der dritte Leiter koaxial zum ersten und zweiten Leiter angeordnet.

Eine einfache Ausführungsform könnte beispielsweise eine zweite Kondensatorwicklung aufweisen, die die erste Kondensatorwicklung koaxial umfasst. Ein Wechselstrom kann so von der Anschlussseite innen durch die erste Kondensatorwicklung zur Kopfseite und von dieser außen durch die zweite Kondensatorwicklung zurück zur Anschlussseite fließen. Gegenüber einem herkömmlichen Kondensator mit gleicher Kapazität wird die Induktivität verringert.

Eine alternative einfache Ausführungsform ist beispielsweise ein Rohr im Inneren der ersten Kondensatorwicklung als zweiter Leiter und ein weiteres Rohr koaxial um die erste Kondensatorwicklung herum als dritter Leiter aufweisen.

In einer bevorzugten Ausführungsform weist der dritte Leiter eine weitere Kondensatorwicklung auf und zwar insbesondere in Kombination mit einem zweiten Leiter, der eine zweite Kondensatorwicklung aufweist. Alle drei Leiter weisen also Kondensatorwicklungen auf. Dies ermöglich, dass ein Strom durch eine Kondensatorwicklung zur Kopfseite und von dort durch die anderen beiden Kondensatorwicklungen zurückfließt, was sich günstig auf die Induktivität auswirkt Vorzugsweise ist hierzu auf der Anschlussseite der dritte Leiter mit dem ersten oder mit dem zweiten Leiter verbunden, wodurch der Stromfluss in dem genannten Sinne sichergestellt wird. Alternativ könnten die Kondensatorwicklungen jeweils eigene Anschlusselemente auf der Anschlussseite aufweisen, so dass sich der Stromfluss je nach Anschluss an diese Anschlusselemente ergibt. Insbesondere ist der erste Leiter koaxial zwischen dem zweiten und dritten Leiter angeordnet und alle drei Leiter auf der Anschlussseite miteinander verbunden. Der Strom kann so durch die erste Kondensatorwicklung zur Kopfseite und von dort aus radial innen und außen wieder zurück zur Anschlussseite fließen, nämlich durch die zweite und die weitere Kondensatorwicklung.

Der Kondensator kann weitere Kondensatorwicklungen aufweisen, die insbesondere alle koaxial ineinander angerordnet sind, beispielsweise drei Kondensatorwicklungen, durch die der Strom parallel von der Anschlussseite zur Kopfseite und zwei jeweils dazwischenliegende Kondensatorwicklungen, durch die der Strom parallel wieder zurückfließen kann. Die drei Kondensatorwicklungen sind über das Kopfstück mit den zwei anderen Kondensatorwicklungen in Reihe geschaltet.

Vorzugsweise sind die Summe der Wicklungsvolumina parallel geschalteter Kondensatorwicklungen im Wesentlichen gleich. Die Wicklungsvolumina entsprechen dabei im Wesentlichen der aufgewickelten Kondensatorfläche der jeweiligen Kondensatorwicklung und damit deren Kapazität. Hierdurch stellen sich an den parallel geschalteten Kondensatorwicklungen die gleichen Stromstärken ein, was sich günstig auf die Induktivität auswirkt. Vorzugsweise haben außerdem die parallel geschalteten Kondensatorwicklungen in Summe eines gedachten Hinwegs zum Kopfstück die gleiche Kapazität wie die (dazu in Reihe geschalteten) anderen parallel geschalteten Kondensatorwicklungen eines gedachten Rückwegs. Damit steht an den Kondensatorwicklungen des Hinwegs die gleiche Spannung wie an jenen des Rückwegs an, wodurch die gleichen Materialien für die Kondensatorwicklungen mit der gleichen Spannungsfestigkeit verwendet werden können.

Insbesondere für den Fall, dass es außer der ersten und zweiten Kondensatorwicklung keine weitere Kondensatorwicklung gibt, ist es daher bevorzugt, dass die erste und die zweite Kondensatorwicklung im Wesentlichen gleich große Wicklungsvolumina aufweisen.

Für den Fall einer Anordnung, bei der die erste Kondensatorwicklung allein den Hinweg und eine zweite und eine weitere Kondensatorwicklung parallel einen Rückweg bilden, schlägt die Erfindung vor, dass das Wicklungsvolumen der ersten Kondensatorwicklung im Wesentlichen gleich groß ist wie die Summe der Wicklungsvolumina der zweiten und weiteren Kondensatorwicklung.

Die Erfindung schlägt vor, dass der erste und/oder der zweite Leiter mehrere Anschlusselemente aufweist, vorzugsweise gebildet durch Drähte, Bolzen oder Einpresskontakte. Im Gegensatz zu einem einzelnen Anschlusselement wird durch mehrere Anschlusselemente eine bessere Verteilung des Stroms in den Leitern erreicht. Hierdurch werden Induktivitäten im Kondensator verringert.

Die Erfindung wird nachfolgend anhand von vier Ausführungsbeispielen erläutert. Die vier Figuren zeigen jeweils eines der vier Ausführungsbeispiele in einer perspektivischen, vereinfachten Schnittdarstellung. Gleiche oder sich entsprechende Elemente sind dabei jeweils mit der gleichen Bezugsziffer bezeichnet.

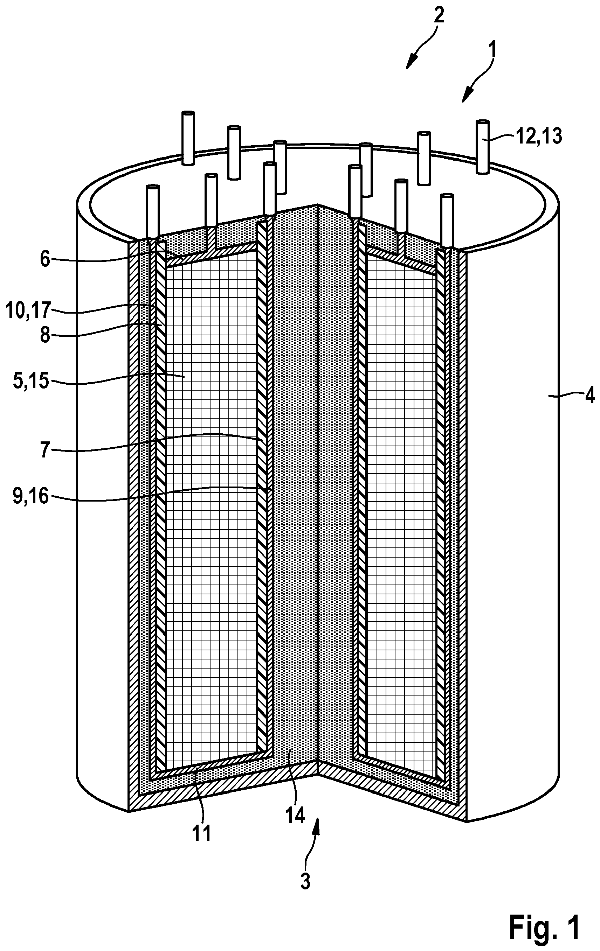

In Figur 1 ist ein Kondensator 1 mit einer in der Figur oben dargestellten Anschlussseite 2 und einer gegenüberliegenden Kopfseite 3. Die Bezeichnungen "oben" und "unten" beziehen sich im Weiteren auf diese Darstellung, die auch in den anderen Figuren beibehalten wird, ohne dass den Kondensatoren 1 eine bestimmte Einbaulage zukäme. Der Kondensator 1 weist eine im Wesentlichen zylindrische Form auf, wobei die Anschlussseite 2 und die Kopfseite 3 jeweils kreisförmige Stirnseiten des Zylinders bilden. Eine becherförmige elektrisch isolierende Hülle 4 aus Kunststoff umfasst das Innere des Kondensators 1, außer auf der Anschlussseite 2. Auch die Kopfseite 3 weist also die Hülle auf. Die Kopfseite 3 weist keine Anschlusselemente auf. Im Inneren erstreckt sich kreisringförmig eine erste Kondensatorwicklung 5 von der Anschlussseite 2 zur Kopfseite 3. Die erste Kondensatorwicklung 5 hat einen aus dem Stand der Technik bekannten Aufbau, der in der Figur nicht im Detail dargestellt ist. Beispielsweise besteht die erste Kondensatorwicklung 5 aus einer ersten und einer zweiten leitendenden Folie, zwischen denen zwei Isolierfolien angeordnet sind. Die erste leitende Folie erstreckt sich dabei axial weiter nach oben als die zweite leitende Folie. Am unteren Ende der leitenden Folien ist es entsprechend umgekehrt. Die Isolierfolien erstrecken sich weiter nach oben als die zweite leitende Folie, aber nicht so weit wie die erste leitende Folie. Aufgrund der Wickelung steht die erste leitende Folie somit spiralförmig oben über die anderen Folien über und die zweite leitende Folie auf der Unterseite. Hierdurch kann die erste Kondensatorwicklung 5 oben an der ersten leitenden Folie und unten an der zweiten leitenden Folie kontaktiert werden. Die Isolierfolie dient als Dielektrikum. An der oberen Stirnseite ist die erste Kondensatorwicklung 5 über eine erste Anschlussplatte 6 kontaktiert. Die erste Anschlussplatte 6 ist insbesondere eine Kupferplatte oder eine elektrisch leitende Schoopierschicht und erstreckt sich kreisringförmig zwischen einer rohrförmigen inneren Isolierschicht 7 und einer rohrförmigen äußeren Isolierschicht 8. Die innere Isolierschicht 7 kann als Wickelkern beim Wickeln der ersten Kondensatorwicklung 5 dienen. Durch die Isolierschichten 7, 8 wird die erste Kondensatorwicklung 5 radial innen gegen ein inneres Kupferrohr 9 und radial außen gegen ein äußeres Kupferrohr 10 elektrisch isoliert. Auf der Kopfseite 3 ist die erste Kondensatorwicklung 5 über eine kreisringförmige Verbindungsplatte 11 elektrisch und mechanisch mit dem inneren und dem äußeren Kupferrohr 9, 10 verbunden. Von dem inneren und dem äußeren Kupferrohr 9, 10 sowie von der ersten Anschlussplatte 6 stehen jeweils vier Bolzen 12 ab, die Anschlusselemente 13 bilden. Die je vier Bolzen 12 sind jeweils um 90° versetzt ringförmig angeordnet. Die Bolzen 12 der Kupferrohre 9, 10 können insbesondere durch Bleche oder dergleichen miteinander verbunden sein (nicht dargestellt). Das Innere des inneren Kupferrohrs 9 ist gefüllt mit einer nicht leitenden Vergussmasse 14, die außerdem einen Raum zwischen der Verbindungsplatte 11 und der Hülle 4 und zwischen dem äußeren Kupferrohr 10 und der Hülle 4 ausfüllt. Auf der Anschlussseite 2 überdeckt die Vergussmasse 14 alle Teile im Inneren des Kondensators 1, so dass nur die Bolzen 12 über die Vergussmasse 14 hinausstehen.

Die erste Anschlussplatte 6 bildet zusammen mit der ersten Kondensatorwicklung 5 einen ersten Leiter 15, das innere Kupferrohr 9 bildet einen zweiten Leiter 16 und das äußere Kupferrohr 10 einen dritten Leiter 17. Durch die Verbindungsplatte 11 sind die drei koaxial zueinander angeordneten Leiter 15, 16, 17 elektrisch und mechanisch miteinander verbunden. Ein Strom kann so über den ersten Leiter 15 von der Anschlussseite 2 zur Kopfseite 3 und von dort parallel über den zweiten und den dritten Leiter 16, 17 wieder zurück zur Anschlussseite 2 fließen. Gegenüber einem Kondensator, bei dem der Strom nur auf der radial inneren oder nur auf der radial äußeren Seite einer Kondensatorwicklung zurückfließen kann, weist der erfindungsgemäße Kondensator 1 eine verringerte Induktivität auf.

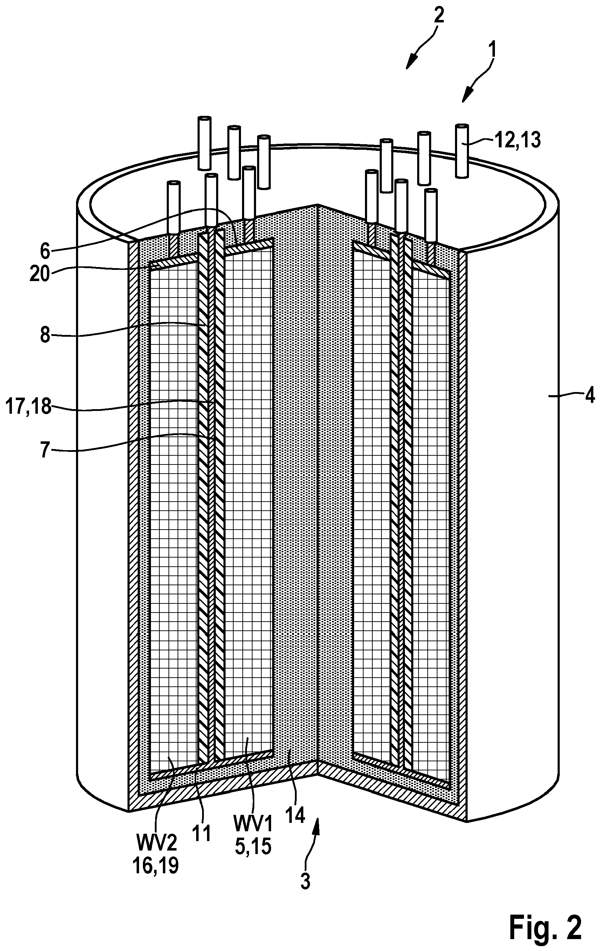

Das in der Figur 2 dargestellte zweite Ausführungsbeispiel zeigt einen Kondensator 1 mit vielen Ähnlichkeiten zum ersten Ausführungsbeispiel, wie beispielsweise die zylindrische Form, die Hülle 4 und die Vergussmasse 14. Zur Vermeidung von Wiederholungen wird im Folgenden daher vor allem auf die Unterschiede eingegangen. Das gleiche gilt nachfolgend auch für das dritte und vierte Ausführungsbeispiel.

Der Kondensator 1 des zweiten Ausführungsbeispiels weist als ersten Leiter 15 eine erste Kondensatorwicklung 5 auf. Diese erste Kondensatorwicklung 5 wird von einem zentralen Kupferrohr 18 umfasst, wobei am zentralen Kupferrohr 18 auf der Innenseite anliegend eine innere Isolierschicht 7 und auf der Außenseite eine äußere Isolierschicht 8 angeordnet ist. Die innere Isolierschicht 7 isoliert gegenüber der ersten Kondensatorwicklung 5 und die äußere Isolierschicht 8 gegenüber einer zweiten Kondensatorwicklung 19, die das zentrale Kupferrohr 18 umfasst und einen zweiten Leiter 16 bildet. Das zentrale Kupferrohr 18 bildet einen dritten Leiter 17. Die drei Leiter 15, 16, 17 sind auf einer Kopfseite 3 durch eine Verbindungsplatte 11 miteinander verbunden. Die erste Kondensatorwicklung 5 weist eine erste Anschlussplatte 6 und die zweite Kondensatorwicklung 19 weist eine zweite Anschlussplatte 20 auf. An der ersten Anschlussplatte 6, an der zweiten Anschlussplatte 20 und an dem zentralen Kupferrohr 18 sind jeweils vier Bolzen 12 über den Umfang verteilt angeordnet und dienen als Anschlusselemente 13.

Ob die innere, erste Kondensatorwicklung 5 oder die äußere, zweite Kondensatorwicklung 19 als erster beziehungsweise zweiter Leiter 15, 16 gesehen wird, spielt keine Rolle. Insbesondere erfolgen die Anschlüsse über die Anschlusselemente 13 an einen Stromkreis jedoch so, dass beide Kondensatorwicklungen 5, 19 parallelgeschaltet sind. Hierdurch wird das Ziel einer verringerten Induktivität erreicht. Ein Strom kann also beispielsweise parallel durch die beiden Kondensatorwicklungen 5, 19 von der Anschlussseite 2 zur Kopfseite 3 und von dort über das zentrale Kupferrohr 18 wieder zurück zur Anschlussseite 2 zurückfließen. Gegenüber bekannten Kondensatoren wird hierdurch bei vergleichbarer Kapazität eine Verringerung der Induktivität erzielt. Das Wicklungsvolumen WV1 der ersten Kondensatorwicklung 5 ist im Wesentlichen gleich groß wie das Wicklungsvolumen WV2 der zweiten Kondensatorwicklung 19. Da die Wicklungsvolumina WV1, WV2 im Wesentlichen der gewickelten Kondensatorfläche entspricht, haben die beiden Kondensatorwicklungen 5, 19 im Wesentlichen die gleiche Kapazität, wodurch sich im Wesentlich die gleichen Stromstärken in beiden Kondensatorwicklungen 5, 19 einstellen, was sich günstig auf die Induktivität des Kondensators 1 auswirkt.

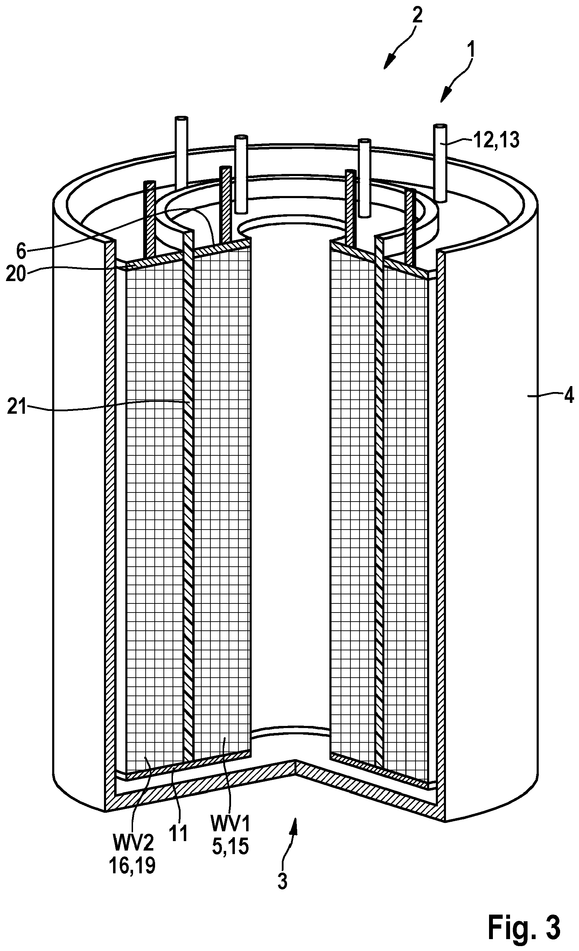

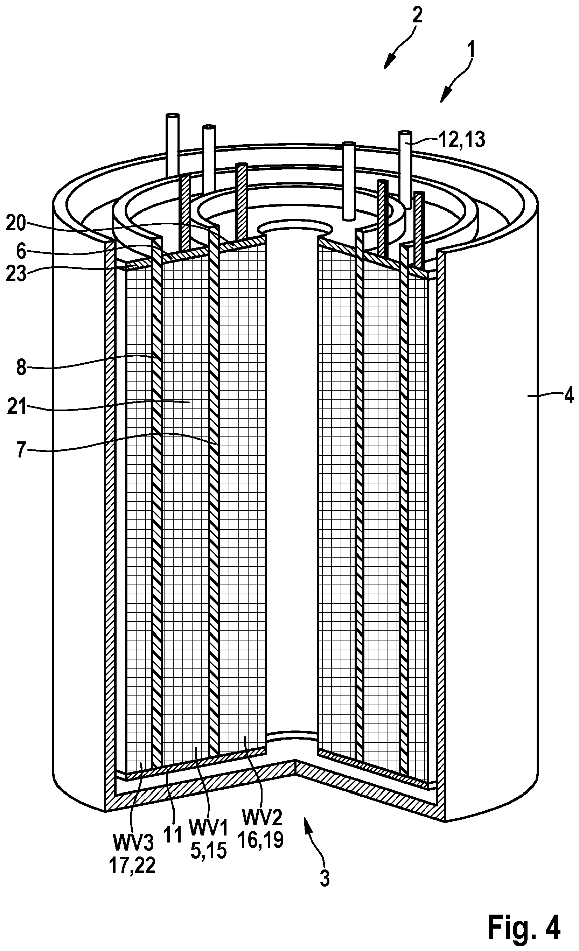

Der Kondensator 1 des dritten Ausführungsbeispiels in Figur 3 hat einen etwas einfacheren Aufbau. In der Figur 3, wie auch in der Figur 4, ist die Vergussmasse 14 nicht dargestellt. Durch den Vergleich der Figuren wird so der Aufbau der Kondensatoren 1 noch deutlicher. Wie im zweiten Ausführungsbeispiel weist auch der Kondensator 1 des dritten Ausführungsbeispiels eine den ersten Leiter 15 bildende erste Kondensatorwicklung 5 auf. Diese wird durch eine zentrale Isolierschicht 21 umgeben und so gegen eine die zentrale Isolierschicht 21 umfassende zweite Kondensatorwicklung 19, die den zweiten Leiter 16 bildet, isoliert. Weitere Leiter von der Anschlussseite 2 zur Kopfseite 3 weist der Kondensator 1 nicht auf. Die beiden Leiter 15, 16 sind koaxial zueinander angeordnet und auf der Kopfseite 3 durch eine Verbindungsplatte 11, oder alternativ durch eine Schoopierschicht, verbunden. Auf der Anschlussseite 2 weist die erste Kondensatorwicklung 5 eine erste Anschlussplatte 6 und die zweite Kondensatorwicklung 19 eine zweite Anschlussplatte 20 auf, die jeweils wiederum mit mehreren Bolzen 12 als Anschlusselemente 13 versehen sind. Ein Strom kann beispielsweise durch die erste Kondensatorwicklung 5 von der Anschlussseite 2 zur Kopfseite 3 und von dort über die zweite Kondensatorwicklung 19 wieder zurück zur Anschlussseite 2 fließen. Die Anordnung der beiden Kondensatorwicklungen 5, 19 koaxial zueinander wirkt sich verringernd auf die Induktivität des Kondensators 1 aus. Auch hier ist das Wicklungsvolumen WV1 der ersten Kondensatorwicklung 5 im Wesentlichen gleich groß wie das Wicklungsvolumen WV2 der zweiten Kondensatorwicklung 19. Hierdurch stellen sich an beiden Kondensatorwicklungen 5, 19 im Wesentlichen die gleichen Spannungen ein.

Der Kondensator 1 des in der Figur 4 dargestellten vierten Ausführungsbeispiels weist eine erste Kondensatorwicklung 5 als ersten Leiter 15 auf, die auf der Innenseite von einer inneren Isolierschicht 7 und auf der Außenseite von einer äußeren Isolierschicht 8 umfasst ist. Die Isolierschichten 7, 8 isolieren auf der Innenseite gegenüber einer zweiten Kondensatorwicklung 19 als zweiten Leiter 16 und auf der Außenseite gegenüber einer weiteren Kondensatorwicklung 22 als dritten Leiter 17. Die drei Leiter 15, 16, 17 sind wiederum durch eine Verbindungsplatte 11 auf der Kopfseite 3 miteinander verbunden. Auf der Anschlussseite 2 ist am ersten Leiter 15 eine erste Anschlussplatte 6, am zweiten Leiter 16 eine zweite Anschlussplatte 20 und am dritten Leiter 17 eine dritte Anschlussplatte 23 angeordnet, wobei die Anschlussplatten 6, 20, 23 wiederum jeweils mehrere Bolzen 12 als Anschlusselemente 13 aufweisen.

Der Kondensator 1 wird an den Anschlusselementen 13 insbesondere so angeschlossen, dass ein Strom durch den ersten Leiter 15 von der Anschlussseite 2 zur Kopfseite 3 und von dort parallel durch den zweiten und den dritten Leiter 16, 17 wieder zurück zur Anschlussseite 2 fließen kann. Das Wicklungsvolumen WV1 der ersten Kondensatorwicklung 5 ist im Wesentlichen gleich groß wie die Summe des Wicklungsvolumens WV2 der zweiten Kondensatorwicklung 19 und des Wicklungsvolumens WV3 der dritten Kondensatorwicklung 22, wobei die Wicklungsvolumina der zweiten und dritten Kondensatorwicklungen 19, 22 im Wesentlichen gleich groß sind. Hierdurch wird erreicht, dass an allen drei Kondensatorwicklungen 5, 19, 22 im Wesentlichen die gleiche Spannung anliegt und der Strom durch die erste Kondensatorwicklung 5 sich im Wesentlichen hälftig auf die zweite und dritte Kondensatorwicklungen 19, 22 aufteilt. Hierdurch und durch die beschriebene koaxiale Anordnung der Kondensatorwicklungen 5, 19, 22 wird ein induktionsarmer Kondensator 1 geschaffen.

### Bezugszeichenliste

- 1: Kondensator
- 2: Anschlussseite
- 3: Kopfseite
- 4: Hülle
- 5: erste Kondensatorwicklung
- 6: erste Anschlussplatte
- 7: innere Isolierschicht
- 8: äußere Isolierschicht
- 9: inneres Kupferrohr
- 10: äußeres Kupferrohr
- 11: Verbindungsplatte
- 12: Bolzen
- 13: Anschlusselement
- 14: Vergussmasse
- 15: erster Leiter
- 16: zweiter Leiter
- 17: dritter Leiter
- 18: zentrales Kupferrohr
- 19: zweite Kondensatorwicklung
- 20: zweite Anschlussplatte
- 21: zentrale Isolierschicht
- 22: weitere Kondensatorwicklung
- 23: dritte Anschlussplatte
- WV1: Wicklungsvolumen der ersten Kondensatorwicklung 5
- WV2: Wicklungsvolumen der zweiten Kondensatorwicklung 19
- WV3: Wicklungsvolumen der weiteren Kondensatorwicklung 22

## Patentansprüche

1. Kondensator (1), mit einer Anschlussseite (2), die Anschlusselemente (13) aufweist, und einer der Anschlussseite (2) gegenüberliegenden Kopfseite (3), die keine Anschlusselemente aufweist, und mit einem ersten und einem zweiten elektrischen Leiter (15, 16), die sich jeweils von der Anschlussseite (2) zur Kopfseite (3) koaxial zueinander erstrecken und an der Kopfseite (3) miteinander verbunden sind, und wobei der erste Leiter (15) eine erste Kondensatorwicklung (5) aufweist, **dadurch gekennzeichnet, dass** der zweite Leiter (16) eine zweite Kondensatorwicklung (19) aufweist und/oder der Kondensator (1) einen dritten elektrischen Leiter (17) aufweist, der sich von der Anschlussseite (2) zur Kopfseite (3) erstreckt und mit dem ersten und zweiten Leiter (15, 16) an der Kopfseite (3) verbunden ist.

2. Kondensator nach Anspruch 1, **dadurch gekennzeichnet, dass** der dritte Leiter (17) eine weitere Kondensatorwicklung (22) aufweist.

3. Kondensator nach Anspruch 1 oder 2, **dadurch gekennzeichnet, dass** der dritte Leiter (17) auf der Anschlussseite (2) mit dem ersten oder mit dem zweiten Leiter (16) verbunden ist.

4. Kondensator nach Anspruch 1, **dadurch gekennzeichnet, dass** die erste und die zweite Kondensatorwicklung (5, 19) im Wesentlichen gleich große Wicklungsvolumina (WV1, WV2) aufweisen.

5. Kondensator nach Anspruch 2 oder 3, **dadurch gekennzeichnet, dass** das Wicklungsvolumen (WV1) der ersten Kondensatorwicklung (5) im Wesentlichen gleich groß ist wie die Summe der Wicklungsvolumina (WV2, WV3) der zweiten und weiteren Kondensatorwicklung (19, 22).

6. Kondensator nach einem oder mehreren der vorstehenden Ansprüche, **dadurch gekennzeichnet, dass** der erste und/oder der zweite Leiter (15, 16) mehrere Anschlusselemente (13) aufweist.

7. Kondensator nach Anspruch 6, **dadurch gekennzeichnet, dass** die Anschlusselemente (13) durch Bolzen (12), Drähte oder Einpresskontakte gebildet sind.
